# EUROPÄISCHE PATENTSCHRIFT

(11) **EP 1 123 247 B1**
(45) Veröffentlichungstag und Bekanntmachung des Hinweises auf die Patenterteilung: **13.11.2002**
(21) Anmeldenummer: 99947355.6
(22) Anmeldetag: 15.09.1999
(51) Int. Cl.: B65H 18/26, B65H 19/22, B65H 27/00

(54) **KONTAKTWALZENSYSTEM EINER WICKELMASCHINE**
CONTACT ROLLERS FOR A WINDING MACHINE
SYSTEME DE CYLINDRES DE CONTACT D'UNE ENROULEUSE

(30) Priorität: 21.10.1998 DE 19848532
(43) Veröffentlichungstag der Anmeldung: 16.08.2001
(73) Patentinhaber: Kampf GmbH & Co. Maschinenfabrik, D-51674 Wiehl (DE)
(72) Erfinder: HUTZENLAUB, Armin, D-51674 Wiehl (DE); KUNKEL, Dietmar, D-51674 Wiehl (DE)
(74) Vertreter: Thul, Hermann, Dipl.-Phys.
(86) Internationale Anmeldenummer: EP9906826
(87) Internationale Veröffentlichungsnummer: WO00023364

(56) Entgegenhaltungen:
- WO-A-99/41174
- DE-C- 3 941 384
- FR-A- 2 343 677

## Beschreibung

### Technisches Gebiet

Die Erfindung betrifft ein Kontaktwalzensystem einer Wickelmaschine mit mehreren hohlzylinderförmigen Walzensegmenten, die Stirnseite an Stirnseite nebeneinander frei drehbar auf einer durchgehenden Achse gelagert sind, und eine Wickelmaschine zum Aufwickeln einer taufenden Warenbahn, insbesondere einer Papierbahn oder Kunststoffolie, die das Kontaktwalzensystem enthält.

### Stand der Technik

In Wickelmaschinen zum Aufwickeln von laufenden Warenbahnen, beispielsweise Papierbahnen oder Kunststoffolien, werden bekannterweise Kontaktwalzen als Andruck- oder Abquetschwalzen verwendet, um insbesondere bei hohen Wickelgeschwindigkeiten das Eindringen von Luft in die Wickelrollen weitgehend zu verhindern. Werden mit der Wickelmaschine durch Längsschnitte unterteilte Warenbahnen zu Wickelrollen aufgewickelt, die beim Aufwickeln mit fluchtenden Hülsen gehalten werden, dann ist es vorteilhaft, die Kontaktwalzen für jede Wickelrolle mit einer Komponente senkrecht zu ihrer Drehachse beweglich zu lagern. So lassen sich Durchmesserunterschiede der Wickelrollen ausgleichen. Die axiale Länge einer Kontaktwalze sollte dabei gleich oder größer sein als die Breite der Wickelrolle, gegen die sie angedrückt wird.

Es ist bekannt, Kontaktwalzen mit fester Länge in einzeln beweglichen Lagern aufzuhängen und mit einer individuell einstellbaren Anpreßkraft gegen die jeweilige Wickelrolle anzudrücken. Kontaktwalzen mit fester Länge können jedoch nur einen begrenzten breiten Bereich von Wickelrollen abdecken. Bei einem Wechsel der Wickelbreiten müssen die Kontaktwalzen gegen andere mit passender Länge ausgewechselt werden. Zum Betreiben einer Wickelmaschine mit sehr variablen Schnittbreiten sind demnach eine Vielzahl von bereitstehenden Kontaktwalzen erforderlich. Zudem müssen bei jedem Formatwechsel die Kontaktwalzen einschließlich ihrer Lagerstellen neu positioniert werden.

Aus der DE 39 41 384 C ist eine Wickelmaschine mit einem gattungsgemäßen Kontaktwalzensystem bekannt, bei der hohlzylinderförmige Walzensegmente als Andruckwalzen lückenlos nebeneinander auf einer durchgehenden Tragachse exzentrisch gelagert sind. Die exzentrische Lagerung bewirkt, dass sich jedes Walzensegment beim gemeinsamen Andrücken gegen die Wickelrollen senkrecht zu seiner Drehachse relativ zu dem benachbarten Walzensegment bewegen kann. Weiterhin können durch eine Verriegelung der Walzensegmente gegeneinander Gruppen auf der Tragachse gebildet werden. Für sehr breite Maschinen ist diese Lösung nicht einsetzbar, da die tragende Achse im Innern der Walzensegmente im Durchmesser begrenzt ist, damit die Exzentrizität für die geforderte Bewegbarkeit ausreichend groß gestaltet werden kann. Unter diesen Bedingungen ist die gemeinsame Tragachse für alle Exzentersegmente bei großen Maschinenbreiten nicht genügend biegesteif. Zudem ist es nicht möglich, jedes einzelne Walzensegment mit einer individuell einstellbaren Anpreßkraft gegen die Wickelrolle zu drücken.

### Darstellung der Erfindung

Der Erfindung liegt die Aufgabe zugrunde, ein gattungsgemäßes Kontaktwalzensystem so zu verbessern, dass es ausreichend biegesteif ist, um auch bei großen Maschinenbreiten eingesetzt werden zu können, und bei dem der Spalt zwischen zwei benachbarten Walzensegmenten zur Vermeidung von Markierungen möglichst gering gehalten werden kann.

Diese Aufgabe wird mit den Merkmalen des Patentanspruchs 1 gelöst. Nach der Erfindung können zwischen zwei Walzensegmenten Stützlager für die Tragachse angeordnet und/oder eine individuelle Andruckmechanik angreifen gelassen werden, ohne dass der Abstand zwischen zwei Walzensegmenten zu groß ist. Der Spalt zwischen zwei benachbarten Walzensegmenten läßt sich extrem gering halten, um beim Aufwickeln ringförmige Markierungen auf den Wickelrollen zu vermeiden.

Die abhängigen Ansprüche enthalten bevorzugte, da besonders vorteilhafte Ausgestaltungen der Erfindung.

### Kurze Beschreibung der Zeichnung

Die Zeichnung dient zur Erläuterung der Erfindung anhand eines vereinfacht dargestellten Ausführungsbeispiels.

Es zeigen:
- Figur 1: die Schrägansicht eines exzentrisch gelagerten Walzensegments mit einem Stützlager für die Tragachse,
- Figur 2: zeigt einen Querschnitt des Stützlagers,
- Figur 3: zeigt als Draufsicht auf das Stützlager den Verlauf der Biegelinie,
- Figur 4: zeigt in einer perspektivischen Darstellung die Anordnung eines Stützlagers und eines Anstellhebels im Bereich zwischen zwei Walzensegmenten,
- Figur 5: zeigt einen Schnitt in Richtung der Tragachse der Kontaktwalze nach Figur 4.

### Wege zur Ausführung der Erfindung

Das Kontaktwalzensystem ist Bestandteil einer Wickelmaschine zum Aufwickeln von laufenden Warenbahnen, insbesondere Papierbahnen oder Kunststoffolien. Die durch Längsschnitte unterteilte Warenbahn wird auf Hülsen zu Wickelrollen aufgewickelt, die während des Aufwickeins entweder von einer gemeinsamen Wickelachse oder jeweils von zwei in ihre Hülse einfahrbaren Spannköpfen gehalten werden. Insbesondere bei hohen Aufwickelgeschwindigkeiten sind Kontaktwalzen erforderlich, die von der auf eine Wickelrolle auflaufenden Bahn teilweise umschlungen sind und jeweils gegen eine Wickelrolle gedrückt werden, um das Eindringen von Luft in die Wickelrollen weitgehend zu verhindern.

Das Kontaktwalzensystem enthält eine Reihe von Stirnseite an Stirnseite nebeneinander auf einer feststehenden Tragachse frei drehbar gelagerten hohlzylinderförmigen Walzensegmente 2. Die axiale Länge eines Walzensegments 2 ist geringer als die minimale Breite einer aufzuwickelnden Warenbahn, beim Ausführungsbeispiel beträgt sie 200 mm bis 300 mm. Benachbarte Walzensegmente 2 können mechanisch miteinander gekuppelt werden, um eine in sich starre Kontaktwalze mit einer der zugehörigen Wickelrolle entsprechenden axialen Länge zu bilden. Die gemeinsame Tragachse 1 für alle Walzensegmente 2 erstreckt sich über die gesamte Arbeitsbreite der Wickelmaschine. Sie ist an ihren beiden Enden im Gestell der Maschine gelagert.

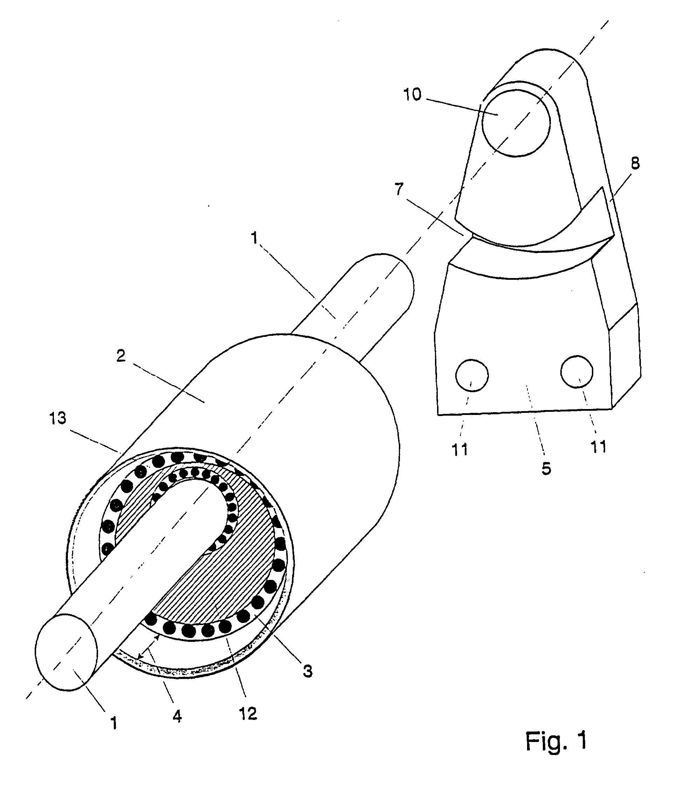

Jedes der hohlzylinderförmigen Walzensegmente 2 ist auf der Tragachse 1 über Radiallager, vorzugsweise Wälzlager, drehbar gelagert, deren äußerer Laufring fest mit der Innenfläche eines Walzensegments 2 verbunden ist. Wesentlich für die Erfindung ist, dass die inneren Lagerteile eines Walzensegments 2 zumindest an einem axialen Ende mit einem gewissen Abstand 4 von der Stirnfläche des Walzensegments 2 enden, wie in Figur 1 dargestellt ist. Dies bietet die Möglichkeit, in diesem Freiraum Teile eines die Tragachse 1 zusätzlich stützenden Stützlagers 5 und/oder eines Anstellhebels 6 anzuordnen, die nach außen bis außerhalb des Querschnittsbereichs des Walzensegments 2 reichen und dort gelagert sind. Im Drehbereich der ringförmigen Stirnfläche eines Walzensegments 2 weisen die plattenförmig gestalteten Stützlager 5 und die Anstellhebel 6 jeweils eine Ringnut 7 auf, in der das Ende des Walzensegments 2 berührungslos rotieren kann. Der minimale Abstand zwischen zwei benachbarten Walzensegmenten 2 wird so durch die Dicke der Rückwand 8 der Ringnut 7 bestimmt. Um den Spalt zwischen zwei benachbarten Walzensegmenten 2 zur Vermeidung von Markierungen auch bei extrem empfindlichen Materialien, beispielsweise Kunststoffolien mit einer Dicke von weniger als 10 µm möglichst gering halten zu können, beträgt die Dicke der Rückwand 8 weniger als 2 mm, bevorzugt 0,7 mm - 1,0 mm. Der Spalt zwischen zwei benachbarten Walzensegmenten beträgt weniger als 5 mm, bevorzugt zwischen 0,8 mm und 3 mm.

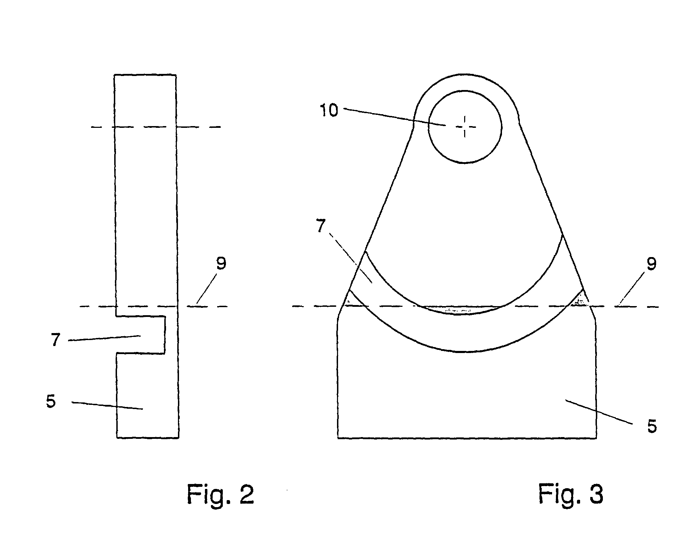

Damit das Stützlager 5 trotz der sehr geringen Rückenwanddicke ausreichend biegesteif ist, um die Tragachse 1 abstützen zu können, muß verhindert werden, dass die zur Hauptbelastungsrichtung senkrecht verlaufende Biegelinie 9 ausschließlich durch die dünne Rückwand 8 verläuft. Wie in Figur 3 dargestellt, sind die verdickten Anteile eines Stützlagers 5 in Relation zur Ringnut 7 so gestaltet, dass die Biegelinie 9 auch durch verdickt gestaltete Anteile außerhalb der Ringnut 7 verläuft. Bevorzugt ist das plattenförmige Stützlager 5 mit der eingearbeiteten Ringnut 7 so gestaltet, dass die Biegelinie 9 sowohl an beiden Seiten als auch im mittleren Teil mit ausreichendem Abstand von der Nut 7 durch die verdickten Teile der Platte verläuft. Bevorzugt weist das Stützlager 5 an einem Ende eine Durchgangsbohrung 10 auf, mit der es über die Tragachse 1 geschoben werden kann, bis sich sein verdicktes Ende mit der Durchgangsbohrung 10 im Inneren des Walzensegments befindet. In dieser Position rotiert das Ende des Walzensegments 2 in der Nut 7. Um das verdickte Oberteil des Stütziagers 5 ausreichend weit in das Innere eines Walzensegments 2 bewegen zu können, beträgt seine Dicke abzüglich der Dicke der Rückennut 8 weniger als der Abstand 4 des Radiallagers 3 vom Ende eines Walzensegments 2. An seinem unteren, außerhalb des Walzensegments 2 befindlichen Ende enthält das Stützlager zwei Durchgangsbohrungen 11, durch die Schrauben geführt werden können, um das Stützlager 5 an einem tragenden Teil der Wickelmaschine, beispielsweise an einer Quertraverse, zu befestigen.

Bei der in den Figuren dargestellten bevorzugten Ausgestaltung eines Kontaktwalzensystems sind die Walzensegmente 2 jeweils exzentrisch um die Tragachse 1 drehbar gelagert. Die exzentrische Lagerung ermöglicht es jedem Walzensegment 2 sich senkrecht zu seiner Drehachse, als in Richtung zur Wickelrolle, relativ zum benachbarten Walzensegment 2 zu bewegen. Jedes Walzensegment 2 ist so in der Lage, sich individuell den Durchmesser der zugehörigen Wickelrolle anzupassen. Ein derartiges Kontaktwalzensystem ist in der DE 39 41 384 C beschrieben.

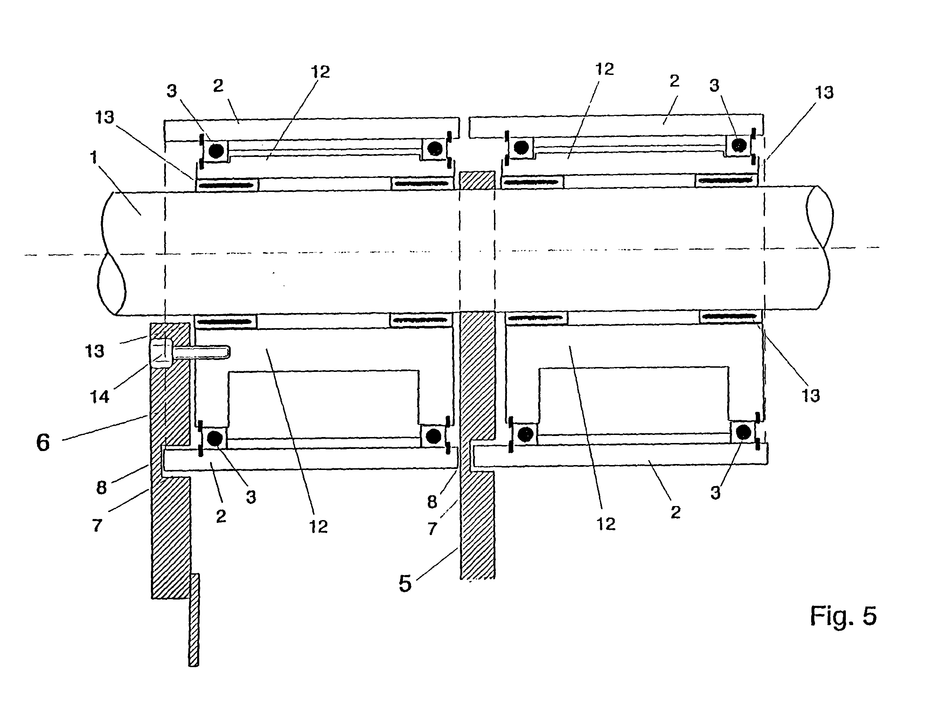

Wie aus den Figuren 1, 4 und 5 ersichtlich, ist im Innern jedes Walzensegments 2 ein ringförmiger Exzenterkörper 12 über Nadellager 13 exzentrisch auf der Tragachse 1 drehbar gelagert. An seinen axialen Enden ist jeder Exzenterkörper 12 jeweils zu einem Ringflansch radial verbreitert. An jedem Ringflansch ist innen der äußere Laufring eines Nadellagers 13, außen jeweils der innere Laufring eines Radiallagers 3 befestigt. Falls an einem Ende eines Walzensegments 2 ein Stützlager 5 oder ein Anstellhebel 6 angeordnet werden soll, ist an diesem Ende der Ringflansch um den Abstand 4 nach innen versetzt.

Der Anstellhebel 6 dient dazu, den Exzenterkörper 12 um die Tragachse 1 exzentrisch zu drehen, um ein Walzensegment 2 mit einer kontrollierten Kraft gegen eine Wickelrolle zu drücken. Jeder Anstellhebel 6 ist daher mit seinem einen Ende mittels Schrauben 14 an dem Exzenterkörper 12 festgeschraubt. Sein anderes Ende ist mit einem Betätigungselement, beispielsweise einer pneumatischen Kolben-Zylinder-Einheit, verbunden, das eine Drehbewegung des Exzenterkörpers 12 um die Tragachse 1 in dem erforderlichen Winkelbereich bewirken kann. Analog zum Stützlager 5 weist der Betätigungshebel 6 an einer dem Walzensegment 2 zugewandten Seite ebenfalls eine Ringnut 7 auf, in der das Ende des Walzensegments 2 berührungsfrei rotieren kann.

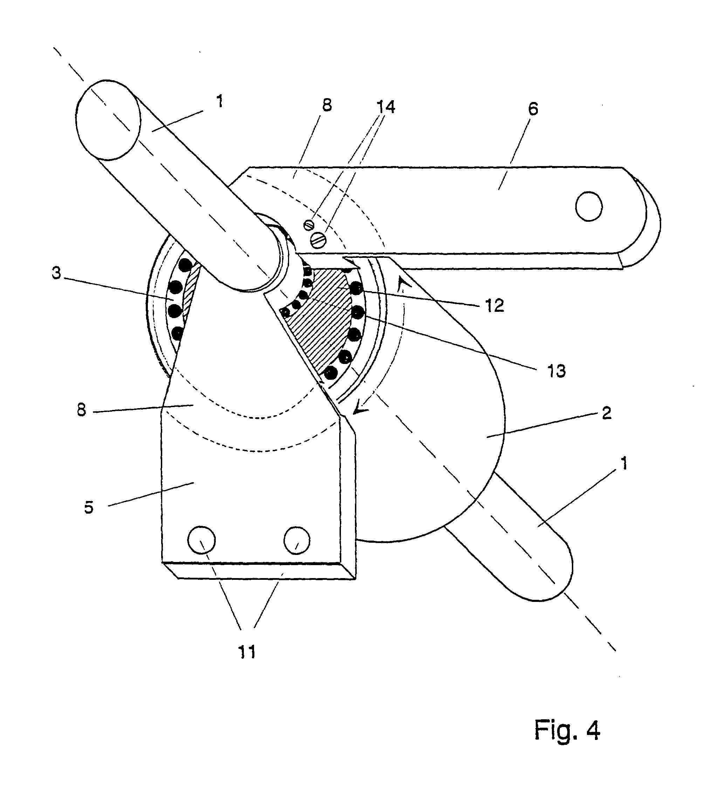

Die Figur 4 zeigt eine Ausführungsform, bei der zwischen zwei benachbarten Walzensegmenten 2 sowohl ein Stützlager 5 als auch ein Anstellhebel 6 angeordnet sind. Um den Spalt zwischen den beiden Walzensegmenten 2 möglichst gering halten zu können, sind bei dieser Ausführungsform das Stützlager 5 und der Anstellhebel 6 in einer zur Drehachse senkrechten Ebene übereinander angeordnet. Die Rückwand 8 der Nut 7 des Anstellhebels 6 bewegt sich in der Ebene der Rückwand 8 der Nut des Stützlagers 5, so dass der minimale Abstand zweier Walzensegmente 2 voneinander durch die Dicke einer Rückwand 8 bestimmt wird. Das Ende des Anstellhebels 6 im Innern des Walzensegments 2 ist so gestaltet, dass es das Lagerende der Stützplatte 5 umgreift, also beim Einbau über dieses geschoben werden kann. Die Stützplatte 5 ist so gestaltet, dass der Anstellhebel 6 über den erforderlichen Winkelbereich kollisionsfrei in deren Ebene bewegt werden kann.

Während des Aufwickelns werden für jede Wickelrolle die in ihrem Breitenbereich befindlichen Walzensegmente 2 zu einer Kontaktwalze der erforderlichen Länge zusammengeschaltet, vorzugsweise durch mechanische Kupplungen zwischen den Anstellhebeln 6. Jede Kontaktwalze kann mittels eines an einem Walzensegment 2 befestigten Anstellhebel 6 mit einer kontrollierten Kraft gegen die zugehörige Wickelrolle gedrückt werden. Bevorzugt wird die Warenbahn der Wickelrolle über die Kontaktwalze so zugeführt, dass sie vor dem Auflaufen auf eine Wickelrolle die Walzensegmente 2 mit einem Winkel zwischen 5° und 30°, bevorzugt zwischen 8° und 20°, umschlingt.

## Patentansprüche

1. Kontaktwalzensystem einer Wickelmaschine mit mehreren hohlzylinderförmigen Walzensegmenten (2), die Stirnseite an Stirnseite nebeneinander frei drehbar auf einer durchgehenden Achse (1) gelagert sind, **dadurch gekennzeichnet, dass** die inneren Lagerteile zumindest an einem axialen Ende mit einem Abstand (4) von der Stirnfläche des Walzensegments enden, um einen Freiraum zu bilden, in dem Teile eines die Achse (1) stützenden Stützlagers (5) und/oder eines Anstellhebels (6) angeordnet werden können, wobei das Stützlager (5) und/oder der Anstellhebel (6) eine Ringnut (7) aufweisen, in der das Ende des Walzensegments (2) berührungslos rotieren kann.

2. Kontaktwalzensystem nach Anspruch 1, **dadurch gekennzeichnet, dass** das Stützlager (5) so gestaltet ist, dass die Biegelinie (9) auch durch verdickt gestaltete Anteile außerhalb der Ringnut (7) verläuft.

3. Kontaktwalzensystem nach Anspruch 1 oder 2, **dadurch gekennzeichnet, dass** die Walzensegmente (2) jeweils drehbar auf einem Exzenterkörper (12) gelagert sind, der exzentrisch auf der Achse (1) drehbar gelagert ist.

4. Kontaktwalzensystem nach Anspruch 3, **dadurch gekennzeichnet, dass** der Anstellhebel (6) zum Verdrehen des Exzenterkörpers (12) an diesem befestigt ist.

5. Kontaktwalzensystem nach einem der Ansprüche 1 bis 4, **dadurch gekennzeichnet, dass** zwischen zwei benachbarten Walzensegmenten (2) sowohl ein Stützlager (5) als auch ein Anstellhebel (6) in einer zur Drehachsen senkrechten Ebene übereinander angeordnet sind.

6. Kontaktwalzensystem nach einem der Ansprüche 1 bis 5, **dadurch gekennzeichnet, dass** die Rückwand (8) der Ringnut (7) eine Dicke von weniger als 2 mm, bevorzugt von 0,7 mm - 1,0 mm, aufweist.

7. Kontaktwalzensystem nach einem der Ansprüche 1 bis 6, **dadurch gekennzeichnet, dass** die Walzensegmente (2) durch mechanische Kupplungen zwischen den Anstellhebeln (6) zu einer Kontaktwalze der erforderlichen Länge zusammenschaltbar sind.

8. Wickelmaschine zum Aufwickeln einer laufenden Warenbahn, insbesondere einer Papierbahn oder Kunststoffolie, **dadurch gekennzeichnet, dass** sie ein Kontaktwalzensystem gemäß einem der Ansprüche 1 bis 7 aufweist.

9. Wickelmaschine nach Anspruch 8, **dadurch gekennzeichnet, dass** das Kontaktwalzensystem so angeordnet ist, dass die einer Wickelrolle zulaufende Bahn ein Walzensegment (2) in einem Winkel von 5° bis 30°, bevorzugt zwischen 8° und 20°, umschlingt.

## Claims

1. Contact-roll system for a winding machine, having a plurality of hollow cylindrical roll segments (2), which are mounted beside one another, end to end, such that they can rotate freely on a continuous shaft (1), **characterized in that** the inner bearing parts, at least at one axial end, end at a distance (4) from the end face of the roll segment, in order to form a clearance in which parts of a supporting bearing (5) supporting the shaft (1) and/or of a setting lever (6) can be arranged, the supporting bearing (5) and/or the setting lever (6) having an annular groove (7) in which the end of the roll segment (2) can rotate without contact.

2. Contact-roll system according to Claim 1, **characterized in that** the supporting bearing (5) is shaped in such a way that the bending line (9) also runs through thickened components outside the annular groove (7).

3. Contact-roll system according to Claim 1 or 2, **characterized in that** the roll segments (2) are in each case rotatably mounted on an eccentric body (12), which is rotatably mounted excentrically on the shaft (1).

4. Contact-roll system according to Claim 3, **characterized in that** the setting lever (6) is fixed to the eccentric body (12) in order to rotate the latter.

5. Contact-roll system according to one of Claims 1 to 4, **characterized in that**, between two adjacent roll segments (2), both a supporting bearing (5) and a setting lever (6) are arranged one above another in a plane at right angles to the axis of rotation.

6. Contact-roll system according to one of Claims 1 to 5, **characterized in that** the rear wall (8) of the annular groove (7) has a thickness of less than 2 mm, preferably of 0.7 mm - 1.00 mm.

7. Contact-roll system according to one of Claims 1 to 6, **characterized in that**, by means of mechanical couplings between the setting levers (6), the roll segments (2) can be connected together to form a contact roll of the required length.

8. Winding machine for winding up a moving material web, in particular a paper web or plastic film, **characterized in that** it has a contact-roll system according to one of Claims 1 to 7.

9. Winding machine according to Claim 8, **characterized in that** the contact-roll system is arranged in such a way that the web running towards a wound roll wraps around a roll segment (2) at an angle of 5° to 30°, preferably between 8° and 20°.

## Revendications

1. Système de cylindre de contact d'une enrouleuse comprenant plusieurs segments de cylindre (2) de forme cylindrique creuse qui sont montés bout à bout l'un à côté de l'autre librement rotatifs sur un axe traversant (1), **caractérisé en ce que** les éléments de palier internes se terminent au moins à une extrémité axiale à une certaine distance (4) de la face de bout du segment de cylindre afin de former un espace libre dans lequel des éléments d'un palier de support (5) supportant l'axe (1) et/ou d'un levier de réglage (6) peuvent être disposés, le palier de support (5) et/ou le levier de réglage (6) présentant une rainure annulaire (7) dans laquelle l'extrémité du segment de cylindre (2) peut tourner sans contact.

2. Système de cylindre de contact selon la revendication 1, **caractérisé en ce que** le palier de support (5) est configuré de telle sorte que la ligne de courbure (9) s'étende également à travers des portions de configuration épaissie en dehors de la rainure annulaire (7).

3. Système de cylindre de contact selon la revendication 1 ou 2, **caractérisé en ce que** les segments de cylindre (2) sont montés à chaque fois de manière rotative sur un corps d'excentrique (12) qui est monté rotatif et de manière excentrée sur l'axe (1).

4. Système de cylindre de contact selon la revendication 3, **caractérisé en ce que** le levier de réglage (6) est fixé au corps d'excentrique (12) pour le faire tourner.

5. Système de cylindre de contact selon l'une quelconque des revendications 1 à 4, **caractérisé en ce qu'**entre deux segments de cylindre voisins (2), un palier de support (5) ainsi qu'un levier de réglage (6) sont disposés l'un au-dessus de l'autre dans un plan perpendiculaire à l'axe de rotation.

6. Système de cylindre de contact selon l'une quelconque des revendications 1 à 5, **caractérisé en ce que** la paroi arrière (8) de la rainure annulaire (7) présente une épaisseur de moins de 2 mm, de préférence de 0,7 mm à 1,0 mm.

7. Système de cylindre de contact selon l'une quelconque des revendications 1 à 6, **caractérisé en ce que** les segments de cylindre (2) peuvent être montés ensemble par des accouplements mécaniques entre les leviers de réglage (6) pour donner un cylindre de contact de la longueur nécessaire.

8. Enrouleuse pour enrouler une bande de produit en mouvement, en particulier une bande de papier ou un film plastique, **caractérisée en ce qu'**elle présente un système de cylindre de contact selon l'une quelconque des revendications 1 à 7.

9. Enrouleuse selon la revendication 8, **caractérisée en ce que** le système de cylindre de contact est disposé de telle sorte que la bande acheminée à une bobine entoure un segment de cylindre (2) suivant un angle de 5° à 30°, de préférence compris entre 8° et 20°.
